# EUROPEAN PATENT APPLICATION

(11) **EP 1 783 287 A2**
(43) Date of publication of application: **09.05.2007**
(21) Application number: 06255704.6
(22) Date of filing: 06.11.2006
(51) Int. Cl.: E03F 5/16, B01D 17/00, C02F 1/40

(54) **Waste water separator device**

(30) Priority: 05.11.2005 GB 0522623
(71) Applicant: Miskin Limited, Birmingham, B36 9HY (GB)
(72) Inventor: Lilley, Michael John, Birmingham B36 9HY (GB); Lilley, Susan, Birmingham B36 9HY (GB)
(74) Representative: Gee, Steven William

(57) **Abstract**

A waste water separator device (10; 100) comprising a container (12; 112) having a base (12a; 112a), the device also comprising an inlet (18; 118) with an exit therefrom and an outet (26, 126) with an entrance (26a, 126a) thereto and defmed within the container first, second and third chambers (16, 22, 24; 112, 122, 124) through which waste water flows along a path between the inlet and the outlet, communication between the first and second chambers being by way of at least one aperture (28, 128), in a wall separating the first chamber from the second chamber, close to the base of the container, and communication between the second and third chambers being either over the top of or through an aperture in a wall (20; 120) separating the second chamber from the third chamber at a height above the entrance to the outlet.

## Description

### Description of Invention

The invention relates to a waste water separator device which accepts waste water, typically from the kitchen of a school, restaurant or the like, although it is equally suitable for domestic use, and separates from it grease and particulates and releases cleaner, but still dirty, waste water which can be more readily processed in water treatment works.

The waste water which is discharged from kitchens, particularly commercial ones, can contain a lot of grease which as the water cools and flows more slowly in the sewers can plate out onto the walls of the sewers. This causes the effective diameter of the sewers to be reduced thus reducing the volume of fluid which they can carry, and in extreme cases can cause the sewers to become completely blocked. The grease also causes particulate food matter to become trapped on the walls of the sewers attracting rats and causing health and safety issues. It is therefore preferable to pre-treat the waste water being discharged from kitchens, and other premises, to remove grease and particulate matter in order to reduce these problems.

Several waste water separator devices have been proposed in the past. One such device was described by the current inventors in their earlier application published under number GB 2297277 A. Other examples were described by other applicants in granted patents, numbers GB 2228751 B and EP 0529464 B.

However, none of these devices achieve the level of separation really required.

It is an object of the present invention to provide an alternative form of waste water separator device.

According to the present invention there is provided a waste water separator device comprising:
a container having a base;
an inlet with an exit therefrom; and
an outlet with an entrance thereto,
and defined within the container first, second and third chambers through which waste water flows along a path between the inlet and the outlet,
communication between the first and second chambers being by way of at least one aperture, in a wall separating the first chamber from the second chamber, close to the base of the container, and
communication between the second and third chambers being by way of passage of a wall separating the second chamber from the third chamber at a height above the entrance to the outlet.

The communication between the second and third chambers is by way of flow over and/or flow through (e.g by way of one or more apertures) the wall separating the second chamber from the third chamber.

Preferably the path between the inlet and the outlet is twisting or convoluted so that the waste water not only has to rise and fall to pass from the inlet to the outlet but also has to deviate from a path which appears substantially linear in plan view.

Preferably the inlet includes a bend towards the exit thereof to direct the waste water flowing into the device to flow around the first chamber in a relatively smooth manner. Desirably, the inlet causes the waste water to circulate slowly around part or all of the first chamber.

It is further preferred that the at least one aperture, in the wall separating the first chamber from the second chamber, close to the base of the container is offset from the exit of the inlet.

The at least one aperture, in the wall separating the first chamber from the second chamber, close to the base of the container may be offset at least 90 degrees away from the exit of the inlet.

The at least one aperture, in the wall separating the first chamber from the second chamber, close to the base of the container may be offset at least 160 degrees away from the exit of the inlet.

Preferably when the separator device is to be emptied and cleaned it is removed in its entirety from the use location. Larger embodiments of the invention can be equipped with wheels to facilitate removal.

Embodiments of waste water separator devices according to the invention will now be described, by way of example only, with reference to the accompanying drawings in which:
Figure 1 is a cross section vertically through a first embodiment of a waste water separator device according to the invention;
Figure 2 is a plan view of the waste water separator device of Figure 1;
Figure 3 is a cross section vertically through a second embodiment of a waste water separator device according to the invention; and
Figure 4 is a plan view of the waste water separator device of Figure 3.

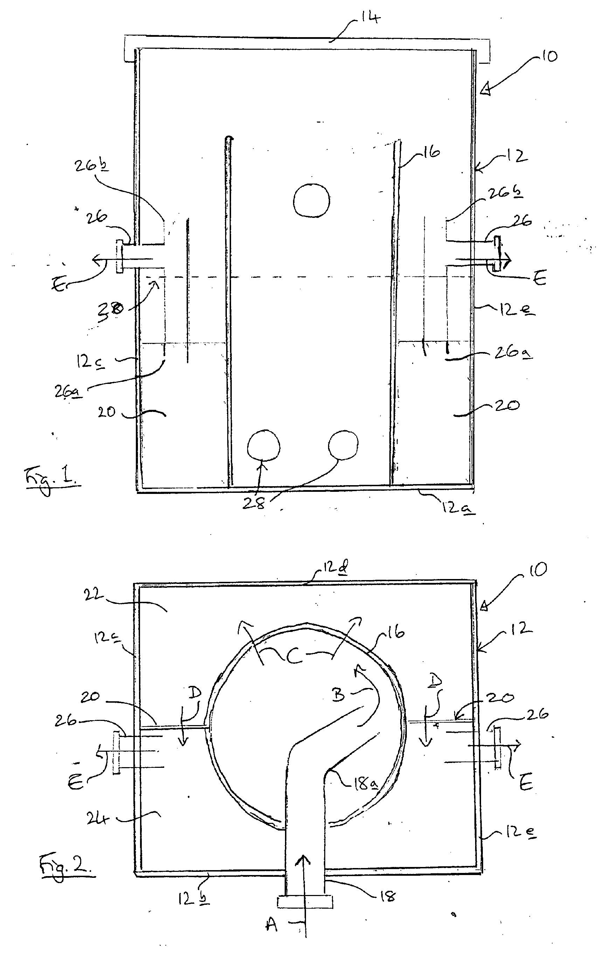

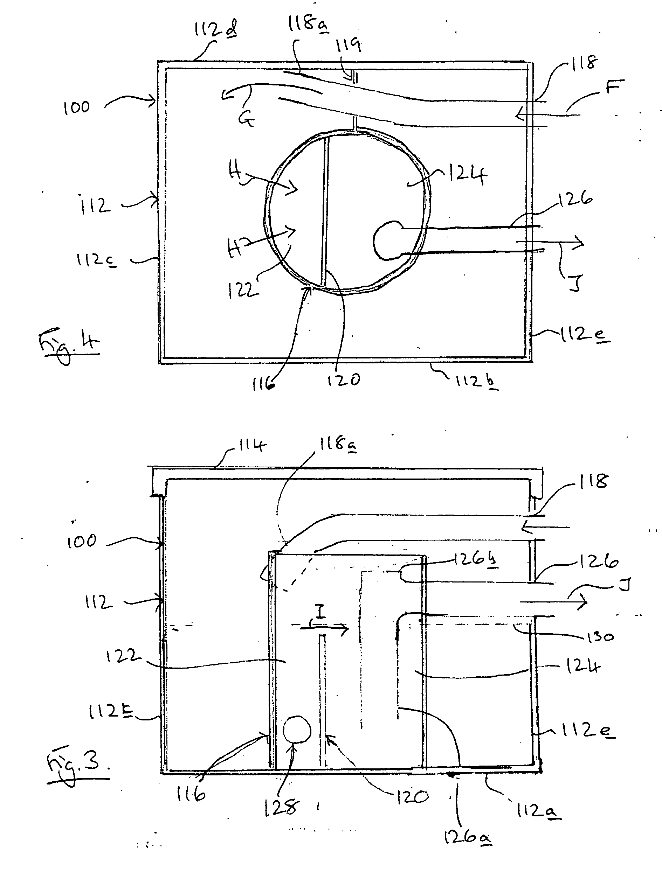

Referring first to Figures 1 and 2, a first embodiment of a waste water separator device 10 is illustrated in vertical cross section and plan view. The separator device 10 comprises a generally rectangular container 12 in a vertical orientation, having a base 12a and sides 12b, 12c, 12d and 12e, with a lid 14 which in use is secured down such that only authorised people can open it. The manner of securing the lid 14 closed, which is not shown, can be anything appropriate for the form of the container 12 and lid 14, for example a lock which requires a key to open it, or security seals.

An inner chamber 16 is located in the centre of the container 12 and in this embodiment is generally circular in cross section and extends from the base 12a of the container 12 to which it is sealed to a point at least approximately 4/5ths of the way up the height of the container 12. An inlet pipe 18 passes through the side 12b of the container 12 and through the wall of the inner chamber 16 approximately 3/4 of the way up the height of the container 12. The inlet pipe 18 has on its inner end 18a, within the inner chamber 16, a bend to direct the waste water entering the device, as shown at arrow A, to flow around the inner chamber 16, as shown by arrow S, rather than straight across it to the other side of the inner chamber 16. This helps to ensure that the waste water flows around the inner chamber 16 in a relatively smooth manner, that is far less turbulent than would be the case if it flowed directly towards a wall of the chamber at an angle of 90 degrees or thereabouts. The relatively slow and smooth circulation within the chamber which is thereby induced assists in allowing the grease to float to the top and the particulates to sink to the bottom as the waste water slows down.

The separator device 10 further comprises baffles 20 which bridge the gap between the container 12 and the inner chamber 16, to divide the lower part of the container 12 outside of the inner chamber 16 into two outer chambers 22 and 24, up to a height approximately 1/3 of the way up the height of the container 12. The inner chamber 16 has apertures or holes 28 in its wall which communicate with the first outer chamber 22 near, but not immediately adjacent to, the base 12a of the container 12. The holes 28 are positioned such that they are offset from the inlet 18 in terms of both height and angular position in order to ensure that the waste water cannot flow into the inner chamber 16 from the inlet 18 and directly out of the inner chamber 16 into the first outer chamber 22, but has to flow at least part way around the inner chamber 16 first. This again assists in allowing the grease sufficient time to float to the top and the particulates sufficient time to sink to the bottom as the waste water slows down.

Outlet pipes 26 are provided in the walls 12c and 12e of the container 12 from the second outer chamber 24. The outlet pipes 26 pass through the walls 12c and 12e at a height approximately 1/2 the way up the height of the container 12. However, the outlet pipes 26 start with entrances 26a at their lower ends below the height of the baffles 20 and have open upper ends 26b above the height at which they pass through the walls 12c and 12e of the container 12.

Although the device 10 is provided with two outlet pipes 26 this is only for adaptability when fitting the device for use, as only one outlet pipe 26 typically needs to be used and the other can be blanked off if it is not required. The outlet pipes could also be provided in other locations and not exactly those shown, provided they communicate with the second outer chamber 24.

The device 10 is used as follows. The inlet pipe 18 is connected to a waste water inlet pipe (not shown) comprising the source of waste water (e.g. where the waste from a sink passes out of the wall of the premises concerned, the device being located outside the building) and one or both outlet pipes 26 are connected to a waste water outlet pipe (also not shown) which comprises the outlet of waste water for the premises concerned (e.g. a pipe that goes to the drains). Preferably, the connections to the waste water pipes are by way of quick-release fittings. The device is then charged with fresh water to the level shown with a chain line 30 in Figure 1, this level being achieved in all three chambers 16, 22 and 24 by means of the communication between the inner chamber 16 and the first outer chamber 22, and because the level is above the height of the baffles 20, allowing water to flow across from the first outer chamber 22 to the second outer chamber 24.

When waste water enters the device 10 (as shown by arrows A and B) it flows relatively smoothly around the inner chamber 16 and as it slows down any grease contained in the waste water rises to the top of the inner chamber 16, whilst some of the (typically heavier) particulates within the waste water will settle to the bottom of the inner chamber 16, below the holes 28. Waste water then flows through the holes 28 between the inner chamber 16 and the first outer chamber 22 (as shown by arrows C), and at this stage will still include some grease and some (typically lighter) particulates. Because the holes 28 are located above the base 12a the particulates which have fallen to the bottom of the inner chamber 16 will not pass through the holes 28.

Communication between the first and second outer chambers 22 and 24 is over the top of the baffles 20 (as shown by arrows D), which means that very few if any remaining particulates pass from the first outer chamber 22 to the second outer chamber 24, but rather settle to the bottom of the first outer chamber 22. Any grease which has passed out of the inner chamber 16 will rise to the top of the water in the container 12 at the level 30, but this is well above the bottoms 26a of the outlet pipes 26 and therefore will not be able to enter the outlet pipes 26 and pass out of the device 10 to the drains with the processed water (as shown by arrows E).

Referring now to Figures 3 and 4, a second embodiment of a waste water separator device 100 is illustrated in vertical cross section and plan views. The separator device 100 comprises a generally rectangular container 112 in a horizontal orientation, having a base 112a and sides 112b, 112c, 112d and 112e, with a lid 114 which in use is secured down such that only authorised people can open it. As for the first embodiment the manner of securing the lid 114 closed, which is not shown, can be anything appropriate for the form of the container 112 and lid 114, for examples a lock which requires a key to open it, or security seals.

A divider 116 is located in the centre of the container 112 and is generally circular in cross section and extends from the base 112a of the container 112 to which it is sealed to a point approximately 3/4 of the way up the height of the container 112. An inlet pipe 118 passes through the side 112e of the container 112 approximately 3/4 of the way up the height of the container 112. The inlet pipe 118 has on its inner end 118a a bend to direct the waste water entering the device, (as shown at arrow F), outwardly and downwardly such that it flows relatively smoothly around the container 112 rather than directly at, i.e. perpendicular to, one of the walls 112b, 112c, 112d and 112e. A baffle 119 is provided between the wall 112g of the container 112 and the divider 116 beneath the inlet pipe 118, to prevent waste water continuing to flow around the container 112.

The separator device 100 further comprises a baffle 120 which separates the divider 116 into first and second inner chambers 122 and 124, up to a height approximately 2/3 of the way up its height. The divider 116 has holes 128 in its wall which communicate between the container 112 and the first inner chamber 122 near the base 112a of the container 112. The holes 128 are positioned such that waste water exiting the inlet 118 has to flow at least part way around the container 112 before it can flow through the holes 128 into the first inner chamber 122.

An outlet pipe 126 is provided from the second inner chamber 124 through the divider 116 and the wall 112e of the container 112. The outlet pipe 126 passes through the divider 116 and the wall 112e at a height approximately 1/2 way up the height of the container 112. However, the outlet pipe 126 starts with an entrance 126a at its lower end below the height of the baffle 120 and has an open upper end 126b above the height at which it passes through the divider 116 and wall 112e of the container 112.

Although the separator device 100 is described above including a single outlet pipe 126, it may be provided with more than one outlet pipe in order to provide alternative modes of connection if required.

The separator device 100 is used in a very similar manner to the separator device 10, as follows. The inlet pipe 118 is connected to the source of waste water (e.g. directly to the waste from a sink, the device being located inside the building) and the outlet pipe 126 is connected to the outlet of waste water for the premises concerned (e.g. a pipe that goes through the wall of the building and to the drains). The device is then charged with fresh water to the level shown with a chain line 130 in Figure 3, this level being achieved in all three chambers 116, 122 and 124 by means of the communication between the container 112, the first inner chamber 122, and because the level is above the height of the baffle 120 allowing communication between the first and second inner chambers 122, 124.

When waste water enters the device 100 (as shown by arrows F and G) it flows relatively smoothly around the container 112 and as it slows down any grease contained in the waste water rises to the top of the container 112, whilst some of the particulates within the waste water will settle to the bottom of the container 112, below the height of the holes 128. Waste water flows through the holes 128 between the container 112 and the first inner chamber 122 (as shown by arrows H), and this will still include some grease and some particulates. However, communication between the first and second inner chambers 122 and 124 is over the top of the baffle 120 (as shown by arrow I), which means that very few if any particulates pass from the first 122 to the second inner chamber 124, but rather settle to the bottom of the first inner chamber 122. Any grease which has passed out of the container 112 will rise to the top of the water in the first and second inner chambers 122 and 124 at the level 130, but this is well above the bottom 126a of the outlet pipe 126 and therefore will not be able to enter the outlet pipe 126 and pass out of the device 100 to the drains with the processed water (as shown by arrow J).

Over time the amount of grease and particulates trapped in the separator devices 10 and 100 will of course increase. Thus, periodically, the separator device 10, 100 will need to be removed and replaced with a fresh one duly charged with fresh water. The separator device 10 or 100 which contains the grease and particulates is disconnected from the waste water inlet pipe and the waste water outlet pipe and is preferably removed from the premises and taken to a treatment depot where it is emptied and cleaned ready for reinstallation elsewhere. To ease removal of the separator device 10 it may conveniently include wheels (not shown). Preferably the greases removed from the separator device 10, 100 are recycled in some way, e.g. they may be used to fuel vehicles in place of diesel, whilst the particulates will be suitably disposed of. The frequency of replacement of the separator devices 10 or 100 at any particular location will depend on the type of premises, but may for example be about 14 days.

If the waste water separator devices 10 and 100 are to achieve the best possible separation of grease and particulates it is important that the flow of waste water along the path from the inlet to the outlet is relatively smooth, i.e. not turbulent as turbulent flow reduces separation. In addition it is important that the waste water cannot flow too rapidly along the path from the inlet to the outlet, but rather must slow down after entering the separator device and preferably to assist this the path must not be a straight line from the inlet to the outlet, but rather must be twisting or convoluted.

It will be understood that the relative dimensions quoted above are approximate and not limiting. However, it is necessary that the bottom of the inlet 18, 118 be above the bottom of the outlet 26, 126, in order to prevent waste water lying within the inlet 18, 118 (which will cause a spillage when the device is disconnected and also lead to settlement of particulates and/or grease within the inlet). Also, the top of the apertures 28, 128 must be below (and preferably substantially far below) the top of the wall 20, 120.

In the embodiments shown the outlets 26, 126 have open upper ends 26b, 126b. This is firstly to prevent a siphoning action taking place at the outlet. Also, if the entrance 26a, 126a to the outlet becomes blocked by grease or particulates, waste water can continue to flow to the outlet by way of the open upper ends 26b, 126b. Finally, the open upper ends 26b, 126b facilitate thorough cleaning of the outlet 26, 126,

The capacity of the waste water separator device can be chosen to suit the application. In a domestic application the capacity could be around 40 litres for example, whilst in a commercial application (with a typically greater waste water flow) the capacity would typically be greater than this.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A waste water separator device comprising:
a container having a base;
an inlet with an exit therefrom; and
an outlet with an entrance thereto,
and defined within the container first, second and third chambers through which waste water flows along a path between the inlet and the outlet,
communication between the first and second chambers being by way of at least one aperture, in a wall separating the first chamber from the second chamber, close to the base of the container, and
communication between the second and third chambers being by way of passage of a wall separating the second chamber from the third chamber at a height above the entrance to the outlet.

2. A waste water separator device according to Claim 1 wherein the communication between the second and third chambers is by way of passage over the wall separating the second chamber from the third chamber.

3. A waste water separator device according to Claim 1 wherein the communication between the second and third chambers is by way of passage through the wall separating the second chamber from the third chamber.

4. A waste water separator device according to any of Claims 1-3 wherein the path between the inlet and the outlet is twisting or convoluted.

5. A waste water separator device according to any of Claims 1-4 wherein the inlet includes a bend towards the exit thereof to direct the waste water flowing into the device to flow around the first chamber in a relatively smooth manner.

6. A waste water separator device according to any of Claims 1-5 wherein the at least one aperture is offset from the exit of the inlet.

7. A waste water separator device according to Claim 6 wherein the at least one aperture is offset from the exit of the inlet by at least 90 degrees.

8. A waste water separator device according to Claim 7 wherein the at least one aperture is offset from the exit of the inlet by at least 160 degrees.

9. A waste water separator device according to any of Claims 1-8 in which the inlet and outlet are adapted for releasable connection to a respective waste water inlet pipe and a waste water outlet pipe, allowing the device to be removed for emptying and cleaning.
